# EUROPÄISCHE PATENTSCHRIFT

(11) **EP 1 440 263 B1**
(45) Veröffentlichungstag und Bekanntmachung des Hinweises auf die Patenterteilung: **26.09.2007**
(21) Anmeldenummer: 02785224.3
(22) Anmeldetag: 17.10.2002
(51) Int. Cl.: F16K 1/12, F16K 1/34, F16K 27/07

(54) **VENTIL FÜR KRYOGENE MEDIEN**
VALVE FOR CRYOGENIC MEDIA
SOUPAPE POUR MILIEUX CRYOGENES

(30) Priorität: 29.10.2001 DE 10152764
(43) Veröffentlichungstag der Anmeldung: 28.07.2004
(73) Patentinhaber: Linde Aktiengesellschaft, 65189 Wiesbaden (DE)
(72) Erfinder: GARNREITER, Franz, 83052 Bruckmühl (DE); BERGHOFF, Rudolf, 22088 Wedel (DE)
(74) Vertreter: Kasseckert, Rainer
(86) Internationale Anmeldenummer: PCT/EP2002/011599
(87) Internationale Veröffentlichungsnummer: WO 2003/038322

(56) Entgegenhaltungen:
- DE-A- 4 033 491
- DE-A- 4 114 122
- US-A- 4 522 222
- US-A- 4 576 015
- US-A- 5 246 204
- US-A- 5 452 746
- US-A- 5 586 745

## Beschreibung

Die Erfindung betrifft ein Ventil mit einer Ventilnadel, einem Ventilgehäuse und einem Ventilsitz geeignet für den Eintrag eines kryogenen Mediums in einen Behälter, der gehobenen hygienischen Anforderungen unterliegt.

Derartige Ventile sind aus den Druckschriften US 5 586 745 und US 4 576 015 bekannt.

Bekannt sind Ventile in mannigfaltigen Ausgestaltungen, die zum Eintrag eines Mediums in einen Behälter, vor allem wenn der Behälter mit einem Material gefüllt ist und gehobenen hygienischen Anforderungen genügen soll, unzureichend geeignet sind. Als problematisch erweist sich dabei insbesondere ein Eindringen der Behälterfüllung in Vertiefungen und Spalte, die für die herkömmlichen Ventile charakteristisch sind.

Aus der US 4,522,222A ist ein Ventil bekannt, das insbesondere für den Eintrag von Lösungen in Leitungen von Entaschungsanlagen vorgesehen ist. In geschlossenem Zustand des Ventils befindet sich die Stirnfläche der Ventilnadel im Wesentlichen in einer Ebene mit der inneren Oberfläche der Leitung. Zwischen Ventilgehäuse und der Stirnfläche der Ventilnadel verbleibt jedoch ein Ringspalt.

In der US 5,452,746A ist eine Anordnung beschrieben, die aus einem Hauptventil und einem Satelliten-Ventil besteht. Die Abgabe eines Mediums, z.B. in einen Behälter, erfolgt dabei über das Hauptventil. Das seitlich am Hauptventil angebrachte Satellitenventil dient dazu, z.B. Dampf in den Ventilkörper des Hauptventils einzublasen.

Der Erfindung liegt die Aufgabe zugrunde, ein Ventil zur Verfügung zu stellen, das einen effizienten und wirtschaftlichen Eintrag eines Mediums in einen Behälter ermöglicht, auch im Hinblick auf den Reinigungsaufwand für den Behälter, wenn dieser gehobenen hygienischen Anforderungen unterliegt.

Die gestellte Aufgabe wird dadurch gelöst, dass die Stirnfläche der Ventilnadel bei geschlossenem Ventil sowie das Ventilgehäuse im Wesentlichen bündig mit einer inneren Oberfläche des Behälters abschließen, wobei kein Ringspalt zwischen der Stirnfläche der Ventilnadel und dem Ventilgehäuse vorhanden ist.

Vorteilhaft ist der Ventilsitz im Wesentlichen in einer Ebene mit einer äußeren Oberfläche des Behälters oder in einem geringen Abstand zu dieser Ebene angebracht. Diese Ausgestaltung der Erfindung weist auch konstruktive Vorteile auf.

Bevorzugt ist die Ventilnadel bei geöffnetem Ventil fliegend gelagert. Besonders bevorzugt ist ein Kanal zur Zufuhr des Mediums in das Innere des Ventils vorgesehen, dessen Längsachse in einem Winkel zwischen 30 Grad und 90 Grad zur Längsachse der Ventilnadel angeordnet ist. Die Ventilnadel wird somit vom einzutragenden Medium seitlich angeströmt.

Zweckmäßigerweise sind zwischen dem Behälter und dem Ventilgehäuse und/oder zwischen dem Ventilgehäuse und der Ventilnadel Passungen mit geringen Toleranzfeldern vorgesehen.

Des Weiteren ist die Verwendung eines Ventils nach einem der Ansprüche 1 bis 5 Gegenstand der Erfindung. Mit besonderem Vorteil ist ein derartiges Ventil zum Eintrag eines kryogenen Mediums in einen Behälter vorgesehen, insbesondere in einen Behälter, der Lebensmittel enthält.

Die Erfindung weist eine Reihe von Vorteilen auf:

Beim Einbau eines erfindungsgemäßen Ventils bleibt die Oberfläche der Behälterinnenwand nahezu unverändert und glatt. Dies ist vor allem für Behälter die Lebensmittel enthalten und regelmäßig gereinigt werden müssen von großem Vorteil. Das Risiko einerbakteriologischen Kontamination durch Lebensmittelreste, die bei der Reinigung nicht erfaßt wurden, kann dadurch wirksam gesenkt werden.

Beim Schließen eines erfindungsgemäßen Ventils wird das Ventil von jeglichem aus dem Inneren des Behälters in das geöffnete Ventil eingedrungenem Material befreit. Es erweist sich als besonderer Vorteil, dass das Ventil bevorzugt so eingesetzt wird, dass es in Richtung auf das Material im Behälter zu schließt. Dies ist beispielsweise für pastöse Lebensmittel in einem Misch-, Kühl- oder Kochbehälter, in den ein Medium wie z.B. ein flüssiges und/oder inertes Gas eingetragen wird, von Vorteil.

Die Erfindung sowie weitere Einzelheiten der Erfindung werden im Folgenden anhand eines in den Figuren dargestellten Ausführungsbeispiels näher erläutert: Hierbei zeigen die
- Figur 1: eine schematische Schnittdarstellung eines erfindungsgemäßen Ventils an einem Behälter, wobei das Ventil geöffnet dargestellt ist,
- Figur 2: eine schematische Schnittdarstellung eines erfindungsgemäßen Ventils an einem Behälter, wobei das Ventil geschlossen dargestellt ist,
- Figur 3: eine schematische Darstellung einer Verwendung eines erfindungsgemäßen Ventils zum Eintrag eines Mediums in einen Mischbehälter, wobei das Ventil im gezeigten Fall in den Boden des Behälters integriert ist.

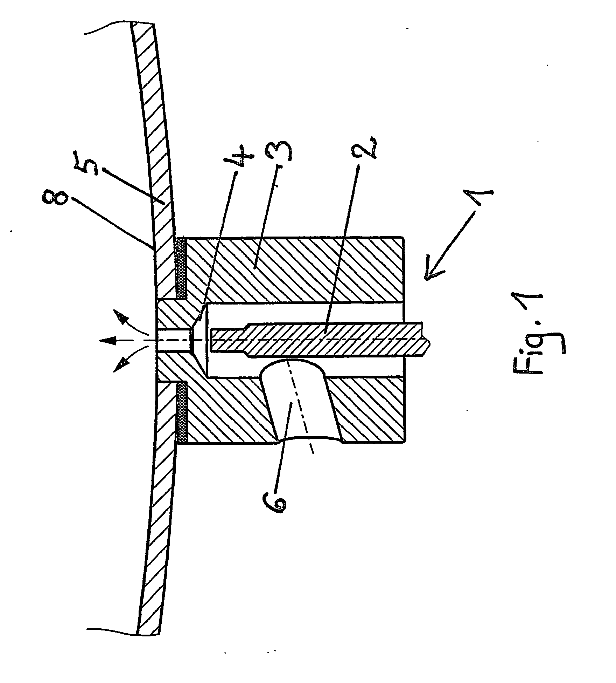

Im Einzelnen zeigt die Figur 1 ein erfindungsgemäßes Ventil 1 mit einer Ventilnadel 2, einem Ventilgehäuse 3 und einem Ventilsitz 4. Ein Medium, z.B. ein kryogenes Kühlmittel wie flüssiger Stickstoff oder flüssiges Köhlendioxid, das mit Hilfe des erfindungsgemäßen Ventils 1 in einen Behälter 5 eingebracht werden soll, passiert zunächst den Kanal 6, der mit einem Reservoir für das Medium in Verbindung steht (nicht dargestellt). Der Kanal 6 führt in das Innere des Ventils 1, wobei seine Längsachse in diesem Beispiel in etwa 75 Grad gegen die Längsachse der Ventilnadel geneigt ist.

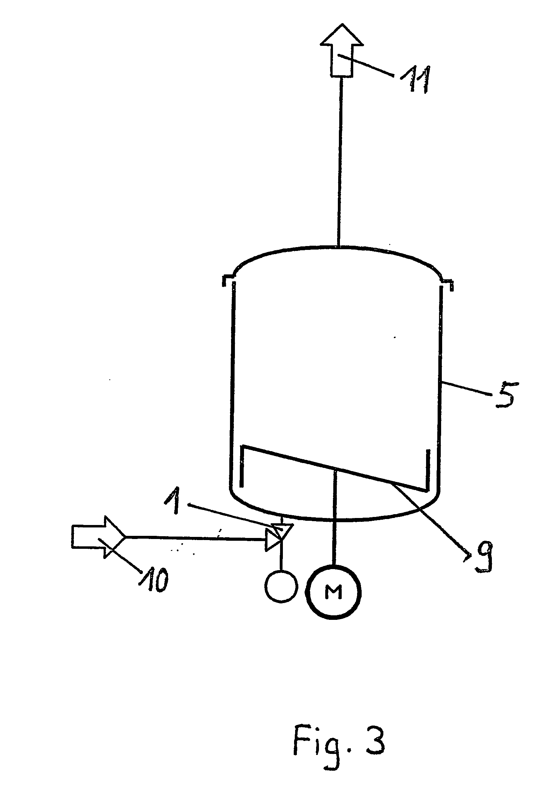

Durch diese Anordnung ergeben sich besonders für den Eintrag eines verflüssigten Gases (z.B. von flüssigem Stickstoff) Vorteile. Der flüssige Stickstoff strömt aus seinem Reservoir, in dem er als siedende Flüssigkeit vorliegt, in den Kanal 6 und trifft als seitliche Anströmung auf die Ventilnadel 2. Die bei geöffnetem Ventil 1 fliegend gelagerte Ventilnadel 2 wird dadurch in Schwingungen versetzt. Da beim Einsatz einer siedenden Flüssigkeit zwangsläufig ein gasförmiger Anteil in den Zufuhrleitungen anfällt, liegt ein großer Vorteil darin, dass durch die Schwingungen der Ventilnadel 2 der aus der Flüssigkeit verdampfende gasförmige Anteil mit der Flüssigkeit durchmischt wird, so dass vorteilhaft ein annähernd homogenes Medium in den Behälter eingetragen werden kann. Diese Durchmischung wirkt sich auch auf den Eintragsimpuls des Gemisches in den Behälter und in ein im Behälter vorhandenes Material günstig aus. So kann auch bei zähem Material, wie beispielsweise Teig oder Fleischmasse zur Wurstherstellung, ein tief in das Material eindringender Kühlmittelstrahl erzeugt werden, der eine sehr gute Durchmischung von Material und Kühlmittel und damit einen guten Wärmeaustausch garantiert. Diese Eigenschaften verbessern besonders die Möglichkeiten für den Eintrag eines Kühlmittels durch den Boden eines Behälters (siehe auch Figur 3), da das eingetragene Kühlmittel auch zuverlässig aus dem Ventilbereich wegtransportiert wird.

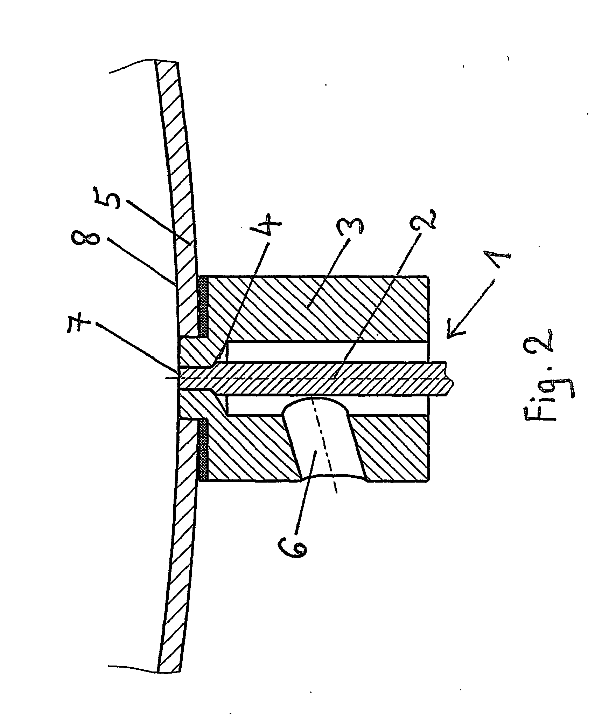

Die Figur 2 zeigt ein erfindungsgemäßes Ventil 1, das geschlossen ist. Der Eintrag des Mediums in den Behälter 5 ist unterbrochen. Vorteilhaft schließt die Stirnfläche 7 der Ventilnadel 2 im Wesentlichen bündig mit der inneren Oberfläche 8 des Behälters 5 ab. Ebenso ist der im Wesentlichen bündige Abschluss des Ventilgehäuses 3 mit der inneren Oberfläche 7 des Behälters 5 gezeigt. Diese Ausgestaltung verhindert unerwünschte Ablagerungen von Material, das sich im Inneren des Behälters befindet, im Bereich des erfindungsgemäßen Ventils 1. Dazu tragen auch die erfindungsgemäßen Passungen gemäß Anspruch 5 bei.

Die Figur 3 zeigt eine Verwendung eines Ventils 1. zum Eintrag eines Mediums in einen Behälter 5, der mit einem Misch- und Schneidwerkzeug 9 ausgestattet und mit zu kühlendem und zu mischendem sowie zu zerkleinerndem Material befüllt ist. Das Ventil 1 ist im gezeigten Fall in den Boden des Behälters 5 integriert. Des Weiteren ist in der Figur 3 eine Zuführung 10 für verflüssigtes Gas und ein Auslass 11 für einen durch die Wärmeübertragung von dem zu kühlenden Material auf das Kühlmittel in die gasförmige Phase übergegangenen Anteil des Kühlmittels gezeigt.

Die vorliegende Erfindung ist besonders zum Kühlen und Gefrieren von flüssigen, pastösen und stückigen Produkten, insbesondere von Lebensmittelprodukten oder pharmazeutischen Produkten, geeignet.

## Patentansprüche

1. Ventil (1) mit einer Ventilnadel (2), einem Ventilgehäuse (3) und einem Ventilsitz (4) geeignet für den Eintrag eines kryogenen Mediums in einen Behälter (5), der gehobenen hygienischen Anforderungen unterliegt, **dadurch gekennzeichnet, dass** die Stirnfläche (7) der Ventilnadel (2) bei geschlossenem Ventil (1) im Wesentlichen bündig mit der Stirnfläche des Ventilgehäuses (3) abschließt, wobei kein Ringspalt zwischen der Stirnfläche (7) der Ventilnadel (2) und dem Ventilgehäuse (3) vorhanden ist.

2. Ventil (1) nach Anspruch 1, **dadurch gekennzeichnet, dass** der Ventilsitz (4) im Wesentlichen in einer Ebene mit einer äußeren Oberfläche des Behälters oder in einem geringen Abstand zu dieser Ebene angebracht ist.

3. Ventil (1) nach Anspruch 1 oder 2, **dadurch gekennzeichnet, dass** die Ventilnadel (2) bei geöffnetem Ventil (1) fliegend gelagert ist.

4. Ventil (1) nach einem der Ansprüche 1 bis 3, **dadurch gekennzeichnet, dass** ein Kanal (6) zur Zufuhr des Mediums in das Innere des Ventils (1) vorgesehen ist, dessen Längsachse in einem Winkel zwischen 30 Grad und 90 Grad zur Längsachse der Ventilnadel (2) angeordnet ist.

5. Ventil (1) nach einem der Ansprüche 1 bis 4, **dadurch gekennzeichnet, dass** zwischen dem Behälter (5) und dem Ventilgehäuse (3) und/oder zwischen dem Ventilgehäuse (3) und der Ventilnadel (2) Passungen mit geringen Toleranzfeldern vorgesehen sind.

6. Verwendung eines Ventils (1) nach einem der Ansprüche 1 bis 5 zum Eintrag eines kryogenen Mediums in einen Behälter (5), insbesondere in einen Behälter (5), der Lebensmittel enthält.

## Claims

1. Valve (1), with a valve needle (2), with a valve housing (3) and with a valve seat (4) suitable for the introduction of a cryogenic medium into a container (5) which is subject to high hygienic demands, **characterized in that** the front face (7) of the valve needle (2), with the valve (1) closed, is essentially flush with the end face of the valve housing (3), no annular gap being present between the front face (7) of the valve needle (2) and the valve housing (3).

2. Valve (1) according to Claim 1, **characterized in that** the valve seat (4) is formed essentially in one plane with an outer surface of the container or at a short distance from this plane.

3. Valve (1) according to Claim 1 or 2, **characterized in that**, with the valve (1) open, the valve needle (2) is mounted in a suspended manner.

4. Valve (1) according to one of Claims 1 to 3, **characterized in that** a duct (6) for feeding the medium into the interior of the valve (1) is provided, the longitudinal axis of which is arranged at an angle of between 30 degrees and 90 degrees to the longitudinal axis of the valve needle (2).

5. Valve (1) according to one of Claims 1 to 4, **characterized in that** fits with low tolerance ranges are provided between the container (5) and the valve housing (3) and/or between the valve housing (3) and the valve needle (2).

6. Use of a valve (1) according to one of Claims 1 to 5 for the introduction of a cryogenic medium into a container (5), in particular into a container (5) which contains food.

## Revendications

1. Soupape (1) comprenant un pointeau de soupape (2), un boîtier de soupape (3) et un siège de soupape (4) permettant l'entrée d'un milieu cryogénique dans un récipient (5) qui est soumis à des exigences strictes en matière d'hygiène, **caractérisée en ce que** la surface frontale (7) du pointeau de soupape (2), lorsque la soupape (1) est fermée, se termine essentiellement en affleurement avec la surface frontale du pointeau de soupape, aucun espace annulaire n'étant prévu entre la surface frontale (7) du pointeau de soupape (2) et le boîtier de soupape (3).

2. Soupape (1) selon la revendication 1, **caractérisée en ce que** le siège de soupape (4) est monté essentiellement dans un plan avec une surface extérieure du récipient ou bien à faible distance par rapport à ce plan.

3. Soupape (1) selon la revendication 1 ou 2, **caractérisée en ce que** le pointeau de soupape (2) est monté volant lorsque la soupape est ouverte (1).

4. Soupape (1) selon l'une quelconque des revendications 1 à 3, **caractérisée en ce qu'**un canal (6) pour l'afflux du milieu à l'intérieur de la soupape (1) est prévu, dont l'axe longitudinal est disposé suivant un angle de 30 à 90 degrés par rapport à l'axe longitudinal du pointeau de soupape (2).

5. Soupape (1) selon l'une quelconque des revendications 1 à 4, **caractérisée en ce que** des ajustements à faibles plages de tolérances sont prévus entre le récipient (5) et le boîtier de soupape (3) et/ou entre le boîtier de soupape (3) et le pointeau de soupape (2).

6. Utilisation d'une soupape (1) selon l'une quelconque des revendications 1 à 5, pour l'entrée d'un milieu cryogénique dans un récipient (5), en particulier dans un récipient (5) qui contient des produits alimentaires.
